Europäisches Patentamt

European Patent Office

Office européen des brevets

(11) Publication number: **0 516 236 A1**

# EUROPEAN PATENT APPLICATION

(21) Application number: **92201495.6**

(22) Date of filing: **25.05.92**

(51) Int. Cl.5: **B60K 7/00, B60K 23/00, B60K 17/356**

(30) Priority: **29.05.91 NL 9100927**

(43) Date of publication of application:
**02.12.92 Bulletin 92/49**

(84) Designated Contracting States:
**AT BE CH DE DK ES FR GB IT LI LU NL SE**

(71) Applicant: **VREDO DODEWAARD B.V.**
**Welysestraat 25a**
**NL-6669 DJ Dodewaard(NL)**

(72) Inventor: **De Vree, Johannes**
**Welysestraat 25a**
**NL-6669 DJ Dodewaard(NL)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Self-propelled agricultural vehicle.**

(57) A self-propelled agricultural vehicle (1) has separate hydraulic motors (11,10) for driving the rear wheels (4) and front wheels (3). As the wheel load ($F_A$) decreases the danger of wheel slip occurs. According to the invention the hydraulic motors (11,10) are fed from the hydropump (9) such that as the weight load of the vehicle changes the torque applied to the wheels is altered. This is of particular importance in the case the vehicle is used as driving for an agricultural machine being supplied from a reservoir (6) on the vehicle.

FIG.2

The invention relates to a self-propelled agricultural vehicle having rear wheels driven over at least one hydraulic motor and at least one front wheel driven over its own hydraulic motor.

Such agricultural vehicles are used for different purposes, for instance for turf layer manuring. The vehicle then carries the turf manuring installation including a supply reservoir for the liquid manure to be introduced into the ground.

During transporting operations the content of the reservoir, and therefore the weight load on the wheels of the vehicle, is constant. During use as turf manuring device for instance the load on the rear wheels in particular decreases as the content of the tank decreases. This reduces the friction force between the grass and the wheels which, when the torque is too high, results in the danger of slip. This causes damage to the meadowland. The reduced weight likewise has consequences for the operation of the turf manuring device which comprises an installation for arranging narrow furrows in the ground which requires for good operation that the most constant possible force is exerted on the ground.

The invention has for its object to obviate this problem. This is achieved according to the invention in that the hydraulic motors are fed from a hydropump such that when the weight load of the vehicle changes the torque applied to the wheels is altered.

Thus is achieved that the torque can be chosen such that slip, and therefore damage to the meadowland, is prevented.

This can be achieved using a control circuit characterized by means for comparing a signal representative of the weight load of the vehicle with a reference value and means for controlling the hydromotors on the basis of the output signal of the comparing means.

It is further possible to hold the speed at a desired value with the control circuit by means of means for comparing the set, desired speed with a signal representative of the actual speed and means for controlling the hydropump on the basis of the comparison.

It is also possible to manually adjust the front wheel motors and the rear wheel motors independently to a desired position. The invention is further elucidated with reference to the drawings.

Fig. 1 shows a schematic side view of a self-propelled vehicle according to the invention in use as turf manuring device, and

fig. 2 shows a diagram of a control circuit for use in the vehicle according to fig. 1.

The vehicle 1 consists of a chassis 2, wheels 3, 4, a cab 5 and a reservoir 6 coupled to the manuring device 7. As the content of the reservoir 6 decreases during use, the pressure force Fa exerted particularly on the rear wheels 4 falls. If the torque remains the same the danger of slip and damage to the meadowland is therefore greatly increased. This effect is further magnified by the influence of the compressive force Fd of the manuring device.

The control circuit for controlling the torque applied to the wheels comprises an electronic unit 8, a hydropump 9 and a hydraulic drive motor 10 for the front wheels and a hydraulic motor 11 for the rear wheels. The front and rear wheel drive can consist of one or two hydromotors. The electronic unit 8 is supplied with a signal 12 corresponding to the position of a drive handle 13 (which determines the travel speed and direction), a pre-setting member 14 and 15 for the front wheels and rear wheels respectively, a speed recording means 16, a measuring signal coming from a level sensor 17 and, finally, adjusting members 18 and 19 for manual adjustment for respectively field operation and operation on blacktop roads.

When the content of reservoir 6 changes the signal generated by the level measuring means 17 changes, whereby for instance the hydromotors 11 are adjusted, which results in a change in the torque applied by these motors. Using the members 14 and 15 the pre-setting of the hydraulic motors 10 and 11 respectively can be varied.

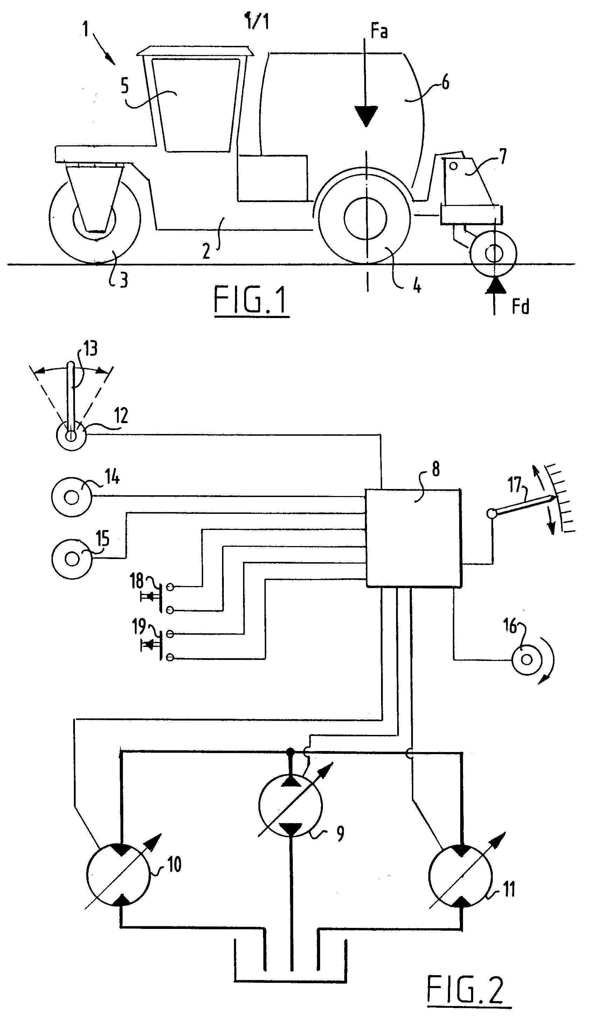

With the control circuit of fig. 2 the speed can also be held constant. For this purpose the signal coming from the drive handle 13 is compared with the signal coming from the speedometer 16 and the stroke volume of hydropump 9 is adjusted on the basis of the difference.

**Claims**

1. Self-propelled agricultural vehicle having rear wheels driven over a hydraulic motor and at least one front wheel driven over its own hydraulic motor, **characterized in that** the hydraulic motors are fed from a hydropump such that as the weight load of the vehicle changes the torque applied to the wheels is altered.

2. Self-propelled vehicle as claimed in claim 1, **characterized in that** the torque applied to the rear wheels can be controlled independently of the torque applied to the front wheel.

3. Control circuit for use with a self-propelled vehicle as claimed in claims 1-2, **characterized by** means for comparing a signal representative of the weight load of the vehicle with a reference value and means for controlling the hydromotors on the basis of the output signal of the comparing means.

4. Control circuit as claimed in claim 3, **characterized in that** means are further present for comparing the set, desired speed with a signal representative of the actual speed and means for controlling the hydropump on the basis of the comparison.

5. Control circuit as claimed in claim 3, **characterized in that** each motor can be adjusted independently to a desired position.

FIG.1

FIG.2

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-2 049 048 (LINDE AG)<br>* page 1, line 1 - page 2, line 5 *<br>* page 3, line 12 - page 7, line 11 *<br>* page 15, line 5 - line 10 *<br>* page 19, line 19 - page 20, line 8 *<br>* page 22, line 3 - line 4 *<br>* page 22, line 19 - page 23, line 2 *<br>* claims 1,2,4; figure 1 *<br>--- | 1-5 | B60K7/00<br>B60K23/00<br>B60K17/356 |
| Y | DE-A-1 922 399 (KÖDEL & BOHM GMBH)<br>* claims 1,4-6; figure 1 *<br>--- | 1,2,5 | |
| Y | FR-A-2 640 558 (ORENSTEIN&KOPPEL AG)<br>* the whole document *<br>--- | 1,3,4 | |
| Y | GB-A-2 136 371 (ZAHNRADFABRIK FRIEDRICHSHAFEN AG)<br>* the whole document *<br>----- | 1 | |
| | | | TECHNICAL FIELDS SEARCHED (Int. Cl.5)<br><br>B60K |

The present search report has been drawn up for all claims

| Place of search | Date of completion of the search | Examiner |
|---|---|---|
| THE HAGUE | 07 SEPTEMBER 1992 | TOPP-BORN S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document